# EUROPEAN PATENT SPECIFICATION

(11) **EP 1 539 479 B1**
(45) Date of publication and mention of the grant of the patent: **10.10.2007**
(21) Application number: 03794386.7
(22) Date of filing: 01.09.2003
(51) Int. Cl.: B32B 3/12, B32B 7/12

(54) **METHOD FOR REINFORCING A CORE AND ARTICLE CONTAINING SAID CORE**
VERFAHREN ZUR VERSTÄRKUNG EINES KERNS UND DEN KERN ENTHALTENDER ARTIKEL
PROCEDE PERMETTANT DE RENFORCER UN NOYAU ET UN ARTICLE CONTENANT LEDIT NOYAU

(30) Priority: 05.09.2002 SE 0202623
(43) Date of publication of application: 15.06.2005
(73) Proprietor: SAAB AB, 581 88 Linköping (SE)
(72) Inventor: KROGAGER, Max, S-582 42 Linköping (SE); WESTERDAHL, Anders, S-582 29 Linköping (SE)
(74) Representative: Holmberg, Magnus
(86) International application number: PCT/SE2003/001353
(87) International publication number: WO 2004/022328

(56) References cited:
- GB-A- 2 267 101
- US-A- 4 910 065
- US-A- 5 876 652
- US-B1- 6 268 049

## Description

The invention concerns a method for reinforcing a core according to the preamble to Claim 1, and an article containing said core.

The fabrication of many articles and structural elements, such as vehicles, vessels and aircraft, out of sheet metal or hardenable composite materials containing fibers, such as glass fibers or carbon fibers, is known. Such composite materials are distinguished by high strength and relatively low weight. In typical cases a structural element comprises a shell of such composite material and a cell core, where the cell core has a honeycomb structure and is contained within the shell.

For fabrication-related reasons, the cell core often consists of a plurality of units of the cell-core type, which are joined together by means of gluing to form the cell core. The glue joints can however become overloaded during fabrication or operational use, so that the units at one or a plurality of extents along the glue joints are at risk of separating from one another. The strength of the cell core is thereby degraded significantly.

To gain access to a core inside an article in order to reinforce or repair the core in cases involving a double shell design, a hole must be made in some part of the shell. The holes made for purposes of repair must subsequently be patched. If the holes also entail that the shell becomes weakened, the shell must also be reinforced so that it can bear its loads. No effective methods for repairing glue joints currently exist. The methods used today are based on cutting out a portion of the cell core material at the glue joints, after which a repair section is inserted and glued securely in place. These methods involve major damage to the cell core material, and to at least one of the shells connected to the glue joints. Because it is difficult to harden the repaired area to the same strength as that of the desired cell core, the repair results in a degradation of the structure.

In summary, repairs of cell cores and consequent repairs to the shell are usually very expensive, and it is difficult to achieve satisfactory strength in both the cell core and the shell in which holes have been made.

One purpose of the present invention is to solve the problem of crack formation in glue joints in a manner that represents an improvement over the prior art. This is achieved according to an embodiment of the invention by means of a method for reinforcing a core constructed of at least two core parts, each of which exhibits a top side, a bottom side and walls joining the top side and bottom side, wherein the core parts are arranged joined wall-to-wall with one another along a joint seam filled with glue, preferably in the form of a glue film. The method is characterized in that notches are realized in a number of places in the glue joint, which notches extend between the walls from the top side to the bottom side of the core parts so that the glue joint can be divided into pieces.

According to an embodiment of the invention, the glue joint is divided into 70 - 200mm-long units, whereby the division can occur at essentially right angles between the walls. According to a special embodiment, the glue joint is divided into 100 - 120mm-long units. The division can be realized by means of sawing or another suitable method so that a gap is formed between the glue joints.

The invention further comprises an article containing the aforesaid core, wherein the core parts are arranged wall-to-wall and joined with one another along a joint seam filled with glue. The article is characterized in that the glue joint contains notches that extend between the walls from the top side to the bottom side of the cell cores so that the glue joint can be divided into pieces.

The crack formation that the invention is intended to prevent is caused by the glue joint being more rigid than the core parts. Dividing the glue into smaller units creates play so that the glue joint can move, whereupon tensile stresses in the article will no longer cause cracks to form along the length of the glue joint.

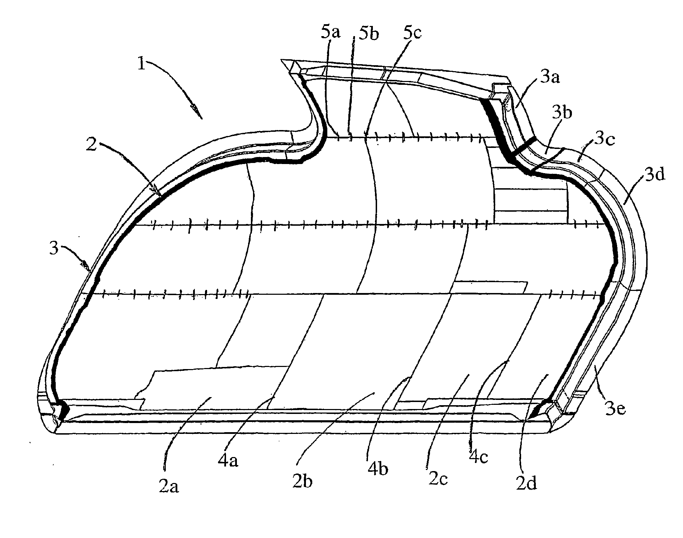

The invention will now be clarified in greater detail by describing various exemplary embodiments, and with reference to the accompanying drawing, in which the figure depicts an article according to an exemplary embodiment of the invention.

In the figure, reference number 1 refers to an article. The article 1 can consists of a structural element for an airplane, a boat, a vessel, a vehicle or any other device, such as a machine or a building. The article 1 in the exemplary embodiment shown contains a core 2 and a frame 3 that surrounds that sides of the core and consists of a number of edge elements 3a, 3b, 3c, 3d and 3e. The article 1 can also contain a first sheet on which the core rests, and a second sheet arranged on top of the core 2, whereupon the core 2 is entirely contained by the sheets and the frame 3. For illustrative reasons, these sheets are however not depicted. The frame 3 and any such sheets are made of sheet metal or composite material containing fibers, such as carbon fibers, glass fibers and/or other fibers. The core 2 has a cellular structure, by means of which the weight of the article can be kept at a low level, e.g. a honeycomb structure. The core 2 is, e.g. an aluminum core, a carbon fiber core or a core made of a phenol matrix and aramid fiber-paper. For fabrication-related reasons, the core 2 usually consists of a plurality of parts 2a, 2b, 2c and 2d of a cell-core type. The core parts 2a, 2b, 2c and 2d are joined to one another via glue joints 4a, 4b and 4c to form the cell core 2. The glue used for the glue joints is, e.g. a foaming glue such as a foaming epoxy glue or a paste glue.

Transverse notches 5a, 5b and 5c are made in the glue joints. In the figure, only a fraction of the notches have reference designations, but the unnumbered notches are identical with the numbered ones. The notches 5a, 5b and 5c are made in the glue joints in order to reduce the stresses in the core 1 so as to thereby prevent longitudinal cracks from forming in the glue joints. The notches in the exemplary embodiment shown have been made in those glue joint sections that are particularly exposed to stresses, while other, less exposed glue joint sections do not have such notches. The notches 5a, 5b, and 5c in the exemplary embodiment shown are oriented at right angles between two glued core part walls. In another embodiment, which is not shown, the grooves are not at right angles to the core part walls, but are rather made at another angle, e.g. 45°. The distance between the notches can be determined by the materials involved in the core and the glue joints, i.e. how, for example, the rigidity and/or thermal expansion properties of the core stand in relation to those of the glue joints. The notches 5a, 5b and 5c are made at a distance of, e.g. 70 - 200mm from one another, e.g. 100 - 120mm apart. The notches 5a, 5b and 5c divide the glue joints entirely into pieces. The notches 5a, 5b and 5c are realized by means of sawing or another suitable method of dividing the glue joints, whereby a gap is obtained between the glue joint parts.

## Claims

1. A method for reinforcing a core (2) constructed of at least two core parts (2a, 2b, 2c, 2d), each of which exhibits a top side, a bottom side and walls joining the top side and the bottom side, whereupon the core parts (2a, 2b, 2c, 2d) are arranged joined wall-to-wall with one another along a joint seam (4a, 4b, 4c) filled with glue, preferably in the form of a glue film, **characterized in that** notches (5a, 5b, 5c) are realized at a number of places in the glue joint, which notches extend between the walls from the top side to the bottom side of the core parts in order to divide the glue joint into pieces.

2. A method according to Claim 1, **characterized in that** the glue joint is divided into 70 - 200mm-long units.

3. A method according to Claim 2, **characterized in that** the glue joint is divided into 100 - 120mm-long units.

4. A method according to any of the foregoing claims, **characterized in that** the glue joint is sawn into pieces.

5. An article (1) containing a core (2) constructed of at least two core parts (2a, 2b, 2c, 2d), each of which exhibits a top side, a bottom side and walls joining the top side and the bottom side, whereupon the core parts (2a, 2b, 2c, 2d) are arranged joined wall-to-wall with one another along a joint seam (4a, 4b, 4c) filled with glue, preferably in the form of a glue film, **characterized in that** notches (5a, 5b, 5c) are made at a number of places in the glue joint, which notches extend between the walls from the top side to the bottom side of the core parts in order to divide the glue joint into pieces.

6. An article according to Claim 5, **characterized in that** the glue film is divided into 70 - 200mm-long units.

7. An article according to Claim 6, **characterized in that** the glue joint is divided into 100 - 120mm-long units.

## Patentansprüche

1. Verfahren zum Verstärken eines Kerns (2), der aus wenigstens zwei Kernteilen (2a, 2b, 2c, 2d) ausgebildet ist, die jeweils eine Oberseite, eine Bodenseite und Wände aufweisen, welche die Oberseite und die Bodenseite miteinander verbinden, wobei die Kernteile (2a, 2b, 2c, 2d) Wand an Wand entlang einer Verbindungsfuge (4a, 4b, 4c), die mit einem Klebstoff gefüllt ist, vorzugsweise in der Form eines Klebstofffilmes, miteinander verbunden angeordnet werden,
**dadurch gekennzeichnet, dass**
Kerben (5a, 5b, 5c) an einer Anzahl von Orten in der Klebeverbindung realisiert werden, wobei sich die Kerben zwischen den Wänden von der Oberseite zu der Bodenseite der Kernteile erstrecken, um die Klebeverbindung in Stücke zu unterteilen.

2. Verfahren nach Anspruch 1,
**dadurch gekennzeichnet, dass**
die Klebeverbindung in 70 bis 200 mm lange Einheiten unterteilt wird.

3. Verfahren nach Anspruch 2,
**dadurch gekennzeichnet, dass**
die Klebeverbindung in 100 bis 120 mm lange Einheiten unterteilt wird.

4. Verfahren nach einem der vorhergehenden Ansprüche,
**dadurch gekennzeichnet, dass**
die Klebeverbindung in Stücke gesägt wird

5. Artikel (1) mit einem Kern (2), der aus wenigstens zwei Kernteilen (2a, 2b, 2c, 2d) ausgebildet ist, die jeweils eine Oberseite, eine Bodenseite und Wände aufweisen, welche die Oberseite und die Bodenseite miteinander verbinden, wobei die Kernteile (2a, 2b, 2c, 2d) Wand an Wand entlang einer Verbindungsfuge (4a, 4b, 4c), die mit einem Klebstoff gefüllt ist, bevorzugt in der Form eines Klebstofffilms, miteinander verbunden angeordnet sind,
**dadurch gekennzeichnet, dass**
Kerben (5a, 5b, 5c) an einer Anzahl von Orten in der Klebeverbindung ausgebildet sind, wobei sich die Kerben zwischen den Wänden von der Oberseite zu der Bodenseite der Kernteile erstrecken, um die Klebeverbindung in Stücke zu unterteilen.

6. Artikel nach Anspruch 5,
**dadurch gekennzeichnet, dass**
der Klebefilm in 70 bis 200 mm lange Einheiten unterteilt ist.

7. Artikel nach Anspruch 6,
**dadurch gekennzeichnet, dass**
die Klebeverbindung in 100 bis 120 mm lange Einheiten unterteilt ist.

## Revendications

1. Procédé pour renforcer un noyau (2) construit avec au moins deux parties de noyau (2a, 2b, 2c, 2d), dont chacune laisse apparaître un côté supérieur, un côté inférieur et des parois assemblant le côté supérieur et le côté inférieur, suite à quoi les parties de noyau (2a, 2b, 2c, 2d) sont agencées assemblées paroi contre paroi le long d'une couture d'assemblage (4a, 4b, 4c) remplie avec de la colle, de préférence sous la forme d'une pellicule de colle, **caractérisé en ce que** des encoches (5a, 5b, 5c) sont réalisées au niveau d'un certain nombre d'emplacements dans le joint de colle, lesquelles encoches s'étendent entre les parois du côté supérieur jusqu'au côté inférieur des parties de noyau afin de diviser le joint de colle en morceaux.

2. Procédé selon la revendication 1, **caractérisé en ce que** le joint de colle est divisé en unités de 70 à 200 mm de long.

3. Procédé selon la revendication 2, **caractérisé en ce que** le joint de colle est divisé en unités de 100 à 120 mm de long.

4. Procédé selon l'une quelconque des revendications précédentes, **caractérisé en ce que** le joint de colle est scié en morceaux.

5. Article (1) contenant un noyau (2) construit avec au moins deux parties de noyau (2a, 2b, 2c, 2d), dont chacune laisse apparaître un côté supérieur, un côté inférieur et des parois assemblant le côté supérieur et le côté inférieur, suite à quoi les parties de noyau (2a, 2b, 2c, 2d) sont agencées paroi contre paroi le long d'une couture d'assemblage (4a, 4b, 4c) remplie avec de la colle, se présentant de préférence sous la forme d'une pellicule de colle, **caractérisé en ce que** les encoches (5a, 5b, 5c) sont réalisées au niveau d'un certain nombre d'emplacements dans le joint de colle, lesquelles encoches s'étendent entre les parois du côté supérieur jusqu'au côté inférieur des parties de noyau afin de diviser le joint de colle en morceaux.

6. Article selon la revendication 5, **caractérisé en ce que** la pellicule de colle est divisée en unités de 70 à 200 mm de long.

7. Article selon la revendication 6, **caractérisé en ce que** le joint de colle est divisé en unités de 100 à 120 mm de long.
